**Europäisches Patentamt**

**European Patent Office**

**Office européen des brevets**

(19)

(11) Veröffentlichungsnummer : **0 486 843 B1**

(12) # EUROPÄISCHE PATENTSCHRIFT

(45) Veröffentlichungstag der Patentschrift :
**18.01.95 Patentblatt 95/03**

(51) Int. Cl.⁶ : **F16D 67/06, B25F 5/00, B25D 16/00, B23Q 11/04**

(21) Anmeldenummer : **91118288.9**

(22) Anmeldetag : **26.10.91**

(54) **Handwerkzeugmaschine mit Bremskupplung.**

(30) Priorität : **20.11.90 DE 4036911**

(43) Veröffentlichungstag der Anmeldung :
**27.05.92 Patentblatt 92/22**

(45) Bekanntmachung des Hinweises auf die
Patenterteilung :
**18.01.95 Patentblatt 95/03**

(84) Benannte Vertragsstaaten :
**CH DE FR GB IT LI**

(56) Entgegenhaltungen :
**EP-A- 0 172 457**
**WO-A-88/06508**
**DE-A- 1 802 116**

(56) Entgegenhaltungen :
**DE-A- 3 731 244**
**US-A- 3 228 497**
**US-A- 3 738 461**
**US-A- 4 090 802**
**PATENT ABSTRACTS OF JAPAN vol. 7, no.
269 (M-259)(1414) 30. November 1983 & JP-
A-58146736 (OGURA) 1. September 1983**

(73) Patentinhaber : **ROBERT BOSCH GMBH**
**Postfach 30 02 20**
**D-70442 Stuttgart (DE)**

(72) Erfinder : **Thome, Ludwig, Dr. Dipl.-Ing.**
**Im Mueller 17**
**W-7022 Leinfelden-Echterdingen 3 (DE)**
Erfinder : **Hettich, Volker**
**Hutwiesenweg 8**
**W-7022 Leinfelden-Echterdingen (DE)**

## Beschreibung

### Stand der Technik

Die Erfindung geht aus von einer Handwerkzeugmaschine nach der Gattung des Anspruchs 1. Aus der DE-OS 38 02 740 ist bekannt, eine Schlingfeder zum Abbremsen des durch ein blockiertes Werkzeug plötzlich beschleunigten Gehäuses einer Handwerkzeugmaschine zu verwenden. Dabei wird die Schlingfeder durch eine träge Masse geschaltet, gegenüber der sich das Gehäuse der Maschine verdreht. Die Trägheitsmasse hat einen großen Platzbedarf und weist ein erhebliches Gewicht auf. Außerdem wird die Wirksamkeit der Trägheitsmasse durch Lagerreibung und die Reibung eines notwendigen federbelasteten Rastbolzens erheblich verringert.

Weiterhin ist aus der US 3,228,497 eine Schlingfederkupplung bekannt, die mittels einer elektromagnetischen Bremse betätigbar ist. Diese Schlingfederkupplung dient zum Stoppen/Durchschalten einer Antriebswelle bei Unterbrechung der Stromzufuhr. Die elektromagetische Bremse ist mittels einer Feder in Richtung ihrer Bremsstellung vorgespannt, so daß eine zugehörige Spule zur Übertragung eines Drehmoments ständig bestromt sein muß, was insbesondere im Dauerbetrieb hohe Energieverluste verursacht und zu einer unerwünschten Erwärmung führt.

Aus der DE 37 31 244 A1 ist eine Handwerkzeugmaschine bekannt, die eine als Schlingfederkupplung ausgeführte Schaltkupplung aufweist. Die Schlingfederkupplung dient dabei dem Zu- oder Abschalten eines Schlagwerks der Handwerkzeugmaschine.

### Vorteile der Erfindung

Die erfindungsgemäße Handwerkzeugmaschine gemäß den kennzeichnenden Merkmalen des Anspruchs 1 hat demgegenüber den Vorteil, mit einer elektronisch aktivierbaren Bremskupplung versehen zu sein, die im Blockierfall des Werkzeugs für eine zuverlässige und schnell ansprechende Kupplung von Antriebswelle und Gehäuse sorgt. Die Bremskupplung ist hierzu mittels einer Detektionseinrichtung aktivierbar, die im Blockierfall die Rotation des Gehäuses um die Antriebswelle wirksam unterbindet.

Durch die in den Unteransprüchen aufgeführten Maßnahmen sind vorteilhafte Weiterbildungen und Verbesserungen der im Anspruch 1 angegebenen Handwerkzeugmaschine möglich. Besonders vorteilhaft ist es, die elektromagnetische Bremse derart anzuordnen, daß sie im Normalbetrieb der Handwerkzeugmaschine keine Aktivierungsenergie benötigt. Darüber hinaus ist es vorteilhaft, die Handwerkzeugmaschine mit einer Freilaufsperre zu versehen, da dann Rückdrehmomente vom Werkzeug in den Antriebsstrang übertragen werden können. Des weiteren bewirkt ein Überlastdetektor bei ungünstigen Betriebszuständen eine Abschaltung des Antriebsmotors.

### Zeichnung

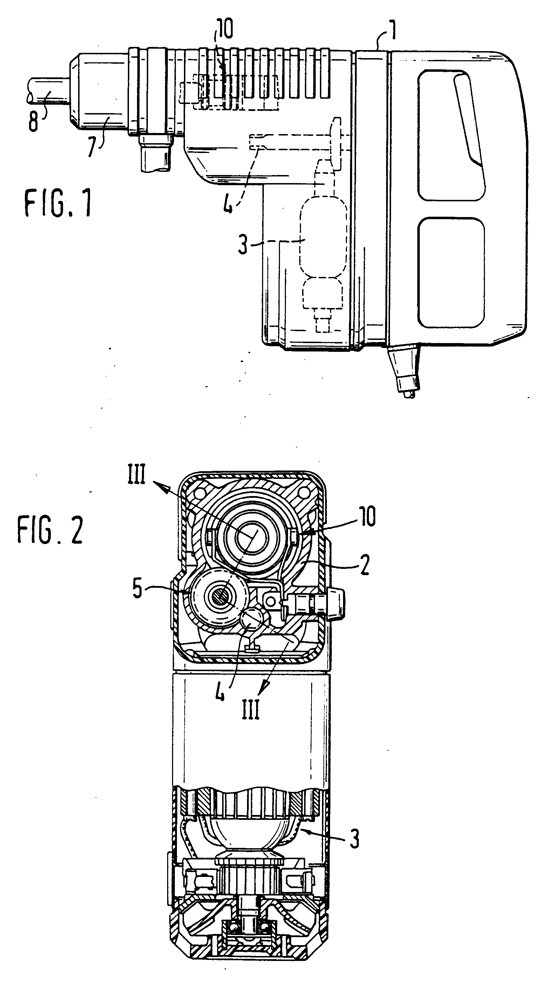

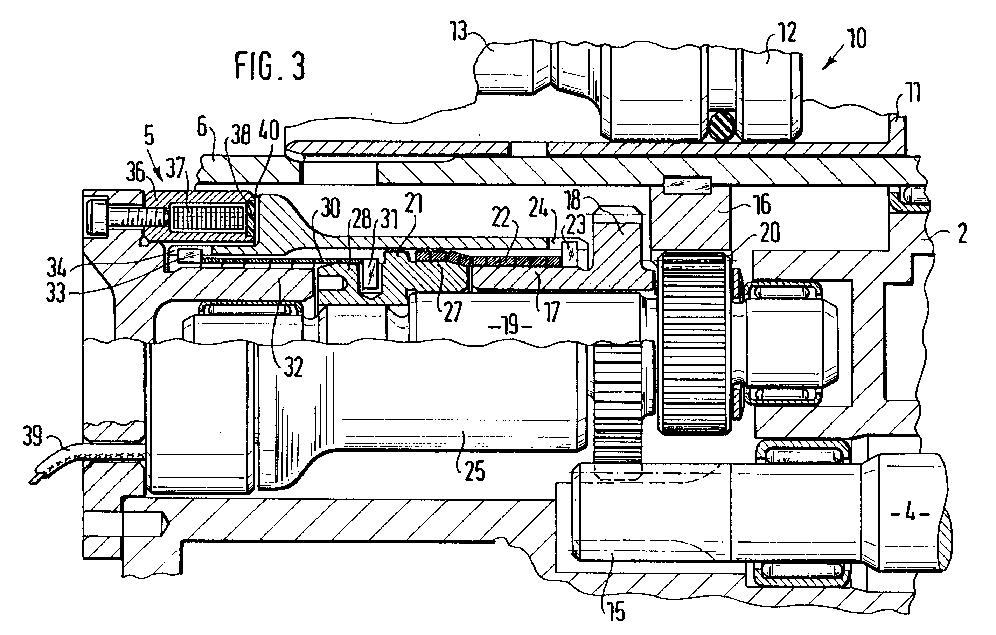

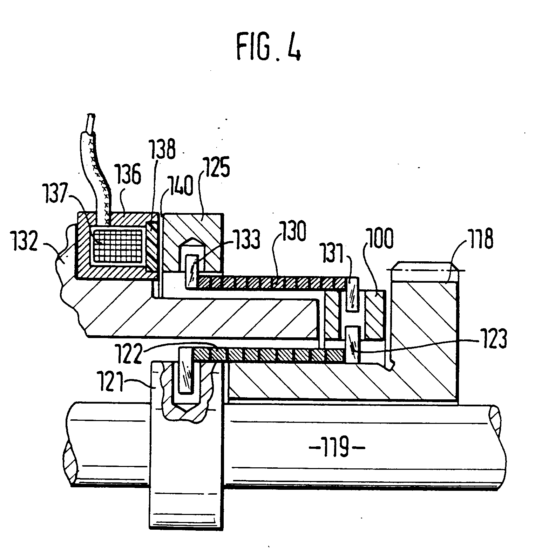

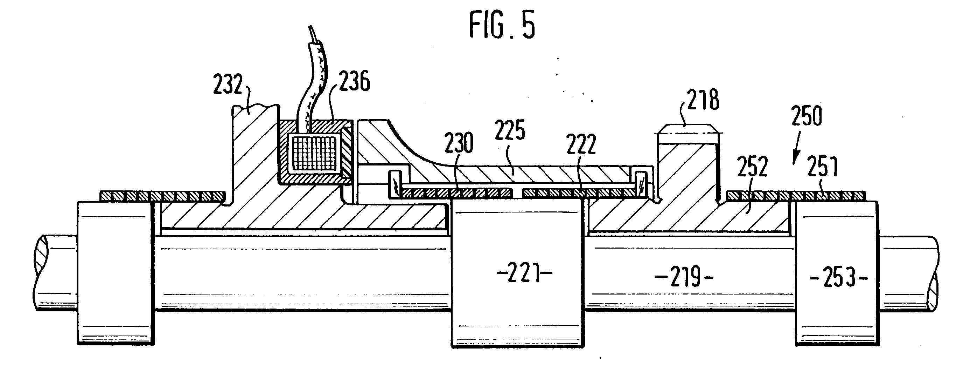

Ein Ausführungsbeispiel der Erfindung ist in der Zeichnung dargestellt und in der nachfolgenden Beschreibung näher erläutert. Figur 1 zeigt eine Gesamtansicht eines Bohrhammers, Figur 2 zeigt einen Querschnitt gemäß Linie II-II in Figur 1, und Figur 3 zeigt einen Teilschnitt III-III in Figur 2. Figur 4 zeigt ein zweites und Figur 5 ein drittes Ausführungsbeispiel.

### Beschreibung der Ausführungsbeispiele

Eine als Bohrhammer ausgeführte Handwerkzeugmaschine hat ein vorzugsweise aus Kunststoff gefertiges Außengehäuse 1, mit dem ein Gehäuse 2 zur Halterung der inneren Bauteile des Bohrhammers fest verbunden ist. In dem Gehäuse 2 ist ein Elektromotor 3 untergebracht, der in Getriebeverbindung mit einer Zwischenwelle 4 steht. Die Zwischenwelle 4 steht ihrerseits über ein Schaltwerk 5 mit einem Hammerrohr 6 in Getriebeverbindung, auf das ein Werkzeughalter 7 aufgesetzt ist. In den Werkzeughalter 7 ist ein Werkzeug 8 einsetzbar. Weiter ist von der Zwischenwelle 4 ein an sich bekanntes und nicht in allen Einzelheiten gezeigtes Schlagwerk 10 angetrieben. In Figur 3 ist davon ein hin- und hergehend angetriebener Topfkolben 11, ein darin geführter Schläger 12 und ein von dem Schläger 12 beaufschlagter Döpper 13 ersichtlich. Der Döpper 13 übt im Betrieb axiale Schläge auf den Schaft des Werkzeugs 8 aus.

Die im Gehäuse wälzgelagerte Zwischenwelle 4 trägt ein Ritzel 15 und dient dem Schaltwerk 5 als Antriebswelle. Als Abtriebswelle dient das Hammerrohr 6, das mit einem Zahnrad 16 drehfest verbunden ist.

Das Schaltwerk 5 weist eine Antriebsnabe 18 auf, die mit dem Ritzel 15 kämmt. Eine Schaltwelle 19 steht mit ihrer Verzahnung 20 in ständigem Eingriff mit dem Zahnrad 16 des Hammerrohrs 6. Die Antriebsnabe 18 ist auf der Abtriebsnabe 19 frei drehbar. Mit der Schaltwelle 19 ist eine Abtriebsnabe 21 drehfest verbunden. Um die Außendurchmesser von Antriebsnabe 18 und Abtriebsnabe 21 ist unter Vorspannung eine Schaltfeder 22 geschlungen, die nach dem Prinzip der Seilreibung die beiden Naben kraftschlüssig verbindet. Ihr Windungssinn entspricht der Drehrichtung der Antriebsnabe 18. Antriebsnabe 18, Abtriebsnabe 21 und Schaltfeder 22 bilden zusammen eine schaltbare Schlingfederkupplung in dem Antriebsstrang zwischen Elektromotor 3 und Werkzeughalter 7. Ein radial nach außen abstehendes Ende 23 der Schaltfeder 22 greift in eine Aussparung 24 einer die Schaltfeder 22 umgebenden Schalthülse 25 ein, so daß die Schaltfeder 22 formschlüssig drehfest mit der Schalthülse 25 verbunden ist. Die Abtriebsnabe 21 hat einen vorderen Nabenabschnitt 27, an dem die Schaltfeder 22 anliegt, und einen hinteren Nabenabschnitt 28, an dem eine ebenfalls als Schlingfeder ausgebildete Bremsfeder 30 unter Vorspannung anliegt. Die Bremsfeder 30 ist zusätzlich mit ihrem nach innen in den hinteren Nabenabschnitt 28 hineinragenden Ende 31 formschlüssig mit der Abtriebsnabe 21 verbunden. In axialer Verlängerung zu der Abtriebsnabe 21 schließt sich an diese eine Gehäusenabe 32 an, die jedoch einen geringeren Außendurchmesser aufweist als der hintere Nabenabschnitt 28. Die Abtriebsnabe 21 sowie die Schaltwelle 19 sind gegenüber der Gehäusenabe 32 frei drehbar. Die Schaltwelle 19 ist mittels Nadellagern in der Gehäusenabe 32 und dem Gehäuse 2 drehbar gelagert. Die Bremsfeder 30 umgibt die Gehäusenabe 32, ohne sie zu berühren. Das gehäuseseitige Ende 33 der Bremsfeder 30 greift in eine Aussparung 34 der Schalthülse 25 ein. Abtriebsnabe 21, Bremsfeder 30 und Gehäusenabe 32 bilden zusammen eine schaltbare Schlingfederkupplung, die in nicht gezeigtem geschlossenen Zustand die Schaltwelle 19 und damit das Werkzeug 7 drehfest an das Gehäuse 2 koppelt.

An der Gehäusenabe 32 ist drehfest eine elektromagnetische Bremse 36 befestigt. Die Bremse 36 weist eine Spule 37 und eine nicht ferromagnetische Bremsplatte 38 als Bremsbelag auf. Die Spule 37 kann über Anschlußkabel 39 unter Strom gesetzt werden. Die Bremsplatte 38 liegt mit einem geringen Spalt einer Bremsfläche 40 an der Schalthülse 25 gegenüber. Die Gehäusenabe 32 ist ihrerseits fest mit dem Gehäuse 2 verschraubt. Das gesamte Schaltwerk 5 mit seinen Teilen 18 bis 40 bildet eine Einheit, die patronenartig in das Gehäuse 2 einsetzbar ist und einen Teil des Antriebsstranges zwischen Motor 3 und Werkzeughalter 7 des Bohrhammers 1 bildet.

An dem Elektromotor 3 kann ein nicht gezeigter Überlastdetektor angeordnet sein, der bei zu hohem Motorstrom infolge Durchrutschen bzw. Schließen einer der Kupplungen 18, 21, 22 bzw. 21, 30, 32 eine Abschaltung des Motors 3 bewirkt.

Im Betrieb des Bohrhammers wird die Zwischenwelle 4 vom Elektromotor 3 ständig drehend angetrieben. Über das Ritzel 15 der Zwischenwelle wird die Drehbewegung auf die Antriebsnabe 18 des Schaltwerks 5 übertragen, die ebenfalls ständig drehend angetrieben ist. Mit der Antriebsnabe 18 ist die Abtriebsnabe 21 über die vorgespannte Schaltfeder 22 kraftschlüssig verbunden. Die Schaltfeder 22 umschlingt unter Vorspannung sowohl den Außendurchmesser der Antriebsnabe als auch den Außendurchmesser der Abtriebsnabe 21. Der Windungssinn der Schaltfeder 22 ist so gewählt, daß die Drehung der Antriebsnabe eine Erhöhung des Anpreßdrucks der Feder an die Naben bewirkt. Die Drehbewegung wird von der Abtriebsnabe 21 über die fest mit ihr verbundene Schaltwelle 19 und deren Verzahnung 20 an das Zahnrad 16 des Hammerrohrs 6 übertragen und dient dem drehenden Antrieb des Werkzeugs 8.

Mit den Naben 18, 21 und der Schaltfeder 22 wird auch die Schalthülse 25 dauernd mitgedreht. Ebenfalls dauernd mitgedreht wird die auf den hinteren Nabenabschnitt 28 vorgespannte Bremsfeder 30. Während des Normalbetriebs besteht keine Verbindung der Bremsfeder 30 mit der stillstehenden Gehäusenabe 32.

Ein Blockieren des Werkzeug 8 im Werkstück, d.h. ein plötzliches Abbremsen des Werkzeugs und ruckhaftes Beschleunigen des Gehäuses 1,2 wird durch eine nicht näher gezeigte Detektionseinrichtung erkannt. Diese schließt den Stromkreis durch die Spule 37 der elektromagnetischen Bremse 36. Die durch den Elektromagneten 37 bewirkte Anziehung der sich drehenden Schalthülse 25 bewirkt deren Abbremsung. Bei Betätigung der Bremse dient die Bremsplatte 38 bei ihrer Berührung mit der Bremsfläche 40 als Verschleißfläche. Die abgebremste Schalthülse 25 verdreht das Ende 23 der Schaltfeder 22 gegen ihren Windungssinn, so daß die kraftschlüssige Verbindung der Schaltfeder 22 mit den Naben 18, 21 aufgehoben wird. Das von einer Kupplungshälfte übertragbare Moment $M_T$ berechtet sich nach

$$M_T = M_o (e^{\mu \cdot \varphi} - 1)$$

mit

$M_o$      = Vorspannmoment der Schlingfeder über einer der Reibflächen in Nm

$\mu$      = Reibungskoeffizient, dimensionslos

$\varphi$      = Umschlingungswinkel pro Reibfläche in rad.

Das heißt die kraftschlüssige Verbindung der Schaltfeder 22 mit den Naben 18, 21 wird aufgehoben, sobald das Vorspannmoment $M_o$ Null wird.

Beim Abbremsen der Schalthülse 25 verdreht diese gleichzeitig die Bremsfeder 30 in Richtung ihres Windungssinns so, daß sich die Bremsfeder 30 kraftschlüssig an die Gehäusenabe 32 anlegt. Dadurch wird in kurzer Zeit die mit dem Werkzeug in Verbindung stehende Schaltwelle 19 gegenüber dem Gehäuse 2 stillgesetzt. Dies führt dazu, daß das Gehäuse sich nicht um das Werkzeug 8 herumdrehen kann und der Hand der Bedienungspersonen entgleitet, sondern in den meisten Fällen das verhakte Werkzeug wieder aus dem Mauerwerk oder dem Werkstück losgerissen wird. Der Elektromotor 3 kann währenddessen weiter- beziehungsweise auslaufen und treibt lediglich noch die leerlaufende und sich gegenüber der Schaltwelle 19 drehende Antriebsnabe 18 an.

Wird die Bremse 36 willkürlich durch einen dafür vorgesehenen Schalter während des Betriebs betätigt, so läßt sich damit auch der Drehantrieb des Werkzeugs abschalten.

Das zweite Ausführungsbeispiel gemäß Figur 4 zeigt gegenüber der Parallelschaltung der Schlingfedern aus dem ersten Ausführungsbeispiel eine Reihenschaltung. Gleichartige Bauteile sind mit um 100 erhöhten Bezugszahlen bezeichnet. Das Schaltwerk 105 hat eine Antriebsnabe 118, die drehbar auf einer Schaltwelle 119 gelagert ist. Mit der Schaltwelle 119 ist drehfest eine Abtriebsnabe 121 verbunden, in die formschlüssig eine Schaltfeder 122 eingreift. Außerdem umschlingt die Schaltfeder 122 die Nabe 121 an ihrem Umfang. In ihrem weiteren Verlauf umschlingt die Schaltfeder 122 die Antriebsnabe 118. Das zweite Ende 123 der Schaltfeder 122 ragt in einen Übertragungsring 100 hinein, in den gleichzeitig auch ein Ende 131 einer Bremsfeder 130 hineinragt. Der Übertragungsring 100 verbindet die beiden Federenden 123, 131 formschlüssig. Das zweite Ende 132 der Bremsfeder 130 ist formschlüsssig mit einer Schalthülse 125 verbunden. Ins Innere der Bremsfeder 130 ragt eine Gehäusenabe 132 hinein, ohne die Bremsfeder während des Drehantriebs des in Figur 4 nicht gezeigten Werkzeughalters zu berühren. Auf der mit dem Gehäuse fest verbundenen Gehäusenabe 132 sitzt eine elektromagnetische Bremse 136 mit Spule 137 und einer nicht ferromagnetischen Bremsplatte 138 als Bremsbelag, die einer Bremsfläche 140 der Schalthülse 125 gegenüberliegt.

Im Blockierfall wird wie im ersten Ausführungsbeispiel die Bremse 136 ausgelöst und bremst die während des Betriebs mitdrehende Schalthülse 125 ab. Damit wird auch die Bremsfeder 130 sowie der Übertragungsring 100 gegenüber der Schaltwelle 119 abgebremst. Durch das damit verbundene Abbremsen des Federendes 123 der Schaltfeder 122 wird diese aufgeweitet, sie löst sich von der Antriebsnabe 118 und das Vorspannmoment $M_o$ fällt weg. Damit ist der Antriebsstrang zwischen Motor und Werkzeughalter unterbrochen. Im weiteren Verlauf der Betätigung der Bremse 136 verengt sich die Bremsfeder 130 und schlingt sich um die Gehäusenabe 132. Damit ist die mit dem Werkzeughalter rotatorisch verbundene Schaltwelle 119 mit dem Gehäuse kraftschlüssig verbunden, so daß sich das Gehäuse nicht mehr weiter um das blockierte Werkzeug drehen kann.

Das Schaltwerk 205 gemäß Figur 5 ist in seinem Kern genauso wie das erste Ausführungsbeispiel aufgebaut. Die entsprechenden Bauteile sind mit um 200 erhöhten Bezugsziffern bezeichnet. Im einzelnen sind dies Antriebsnabe 218, Schaltwelle 219, Abtriebsnabe 221, Schaltfeder 222, Schalthülse 225, Bremsfeder 230, Gehäusenabe 232 und eine elektromagnetische Bremse 236. Zusätzlich ist in diesem Ausführungsbeispiel die Kupplung 218, 221, 222 mit einer Freilaufsperre 250 ausgestattet. Diese besteht aus einer weiteren Schlingfeder 251, die mit einem der Schaltfeder 222 entgegengesetzen Windungssinn unter Vorspannung auf die Antriebsnabe 218 und die Schaltwelle 219 aufgewickelt ist. Zu diesem Zweck trägt die Antriebsnabe 218 einen zusätzlichen Nabenabschnitt 252 und die Schaltwelle 219 weist einen zusätzlichen Bund 253 mit gleichen Außendurchmesser wie der Nabenabschnitt 252 auf.

Diese Ausführungsform hat den Vorteil, daß Rückdrehmomente, die vom Werkzeug in den Antriebsstrang eingeleitet werden, von der Schlingfeder 251 auf die Schaltwelle 219 übertragen werden können. Die Schaltfeder 222 wäre dazu nicht in der Lage, da Schlingfedern nennenswerte Momente nur in eine Drehrichtung übertragen können. Wird die Bremse 236 ausgelöst, so löst sich die Schaltfeder 222 wie im ersten Ausführungsbeispiel, während die Schlingfeder 251 entgegen ihrer Momente übertragenden Drehrichtung beansprucht wird und auf dem Nabenabschnitt 252 unter dem Bund 253 durchrutscht.

## Patentansprüche

1. Handwerkzeugmaschine, insbesondere Bohrhammer, mit einer im Antriebsstrang zwischen einem Antriebsmotor (3) und einem Werkzeughalter (7) angeordneten Schaltwelle (19), welche mittels einer Bremsfeder (30) einer Schlingfederkupplung (21, 30, 32) an ein Gehäuse (2) der Handwerkzeugmaschine kuppelbar ist, wobei ein Ende (33) der Bremsfeder (30) drehfest mit einer Schalthülse (25) verbunden ist, die im Normalbetrieb der Handwerkzeugmaschine mit der Schaltwelle (19) mitdreht und die zum Kuppeln der Schlingfederkupplung (21, 30, 32) mittels einer elektromagnetischen Bremse (36) relativ zur Schaltwelle (19) abbremsbar ist, dadurch gekennzeichnet, daß die Bremswirkung der elektromagnetischen Bremse (36) mittels einer Detektionseinrichtung für den Blockierfall des Werkzeugs aktivierbar ist.

**2.** Handwerkzeugmaschine nach Anspruch 1, dadurch gekennzeichnet, daß die elektromagnetische Bremse (36) eine Spule (37) aufweist, die im Blockierfall stromdurchflossen ist.

**3.** Handwerkzeugmaschine nach Anspruch 1 oder 2, dadurch gekennzeichnet, daß sich die Bremsfeder (30) im abgebremsten Zustand der Schalthülse (25) zumindest teilweise um eine gehäusefeste Nabe (32) schlingt.

**4.** Handwerkzeugmaschine nach einem der vorhergehenden Ansprüche, dadurch gekennzeichnet, daß die mit der Schalthülse (25) in Wechselwirkung tretende Fläche der elektromagnetischen Bremse (36) mit einem Bremsbelag (38) versehen ist.

**5.** Handwerkzeugmaschine nach einem der vorhergehenden Ansprüche, dadurch gekennzeichnet, daß mittels der elektromagnetischen Bremse (36) und der Schalthülse (25) gleichzeitig eine Schaltkupplung (18, 21, 22) betätigbar ist, die die Schaltwelle (19) vom Antriebsmotor (3) trennt.

**6.** Handwerkzeugmaschine nach Anspruch 5, dadurch gekennzeichnet, daß die Schaltkupplung (18, 21, 22) als Schlingfederkupplung mit Schaltfeder (22) ausgebildet ist, wobei ein Ende (23) der Schaltfeder (22) in eine Aussparung (24) der Schalthülse (25) greift.

**7.** Handwerkzeugmaschine nach Anspruch 6, dadurch gekennzeichnet, daß die Handwerkzeugmaschine mit einer Freilaufsperre (250) versehen ist, die von einer zusätzlichen Schlingfederkupplung (250, 251, 252) gebildet wird, welche einen zur Schlingfeder (222) der Schlingfederkupplung (218, 221, 222) entgegengesetzten Wicklungssinn hat.

**8.** Handwerkzeugmaschine nach einem der vorhergehenden Ansprüche, dadurch gekennzeichnet, daß die Handwerkzeugmaschine einen Überlastdetektor aufweist, der beim Durchrutschen der Schaltkupplung (18, 21, 22) eine Abschaltung des Antriebsmotors (3) bewirkt.

## Claims

**1.** Hand machine tool, particularly a hammer drill, having a switch shaft (19) which is arranged in the drive train between a drive motor (3) and a toolholder (7) and which can be coupled by means of a brake spring (30) of a wrap spring coupling (21, 30, 32) to a casing (2) of the hand machine tool, one end (33) of the brake spring (30) being connected, securely against rotation therewith, to a switch sleeve (25) which in normal operation of the hand machine tool rotates with the switch shaft (19) and which for the purpose of coupling the wrap spring coupling (21, 30, 32) can be braked relative to the switch shaft (19) by means of an electromagnetic brake (36), characterized in that the braking action of the electromagnetic brake (36) can be brought into effect by means of a detection device in the event of the jamming of the tool.

**2.** Hand machine tool according to Claim 1, characterized in that the electromagnetic brake (36) has a coil (37) through which current flows in the event of jamming.

**3.** Hand machine tool according to Claim 1 or 2, characterized in that, when the switch sleeve (25) is in the braked state, the brake spring (30) wraps itself at least partially around a hub (32) fastened to the casing.

**4.** Hand machine tool according to one of the preceding claims, characterized in that that surface of the electromagnetic brake (36) which comes into interaction with the switch sleeve (25) is provided with a brake lining (38).

**5.** Hand machine tool according to one of the preceding claims, characterized in that by means of the electromagnetic brake (36) and of the switch sleeve (25) a clutch (18, 21, 22), which disconnects the switch shaft (19) from the drive motor (3), can be actuated at the same time.

**6.** Hand machine tool according to Claim 5, characterized in that the clutch (18, 21, 22) is in the form of a wrap spring coupling having a switch spring (22), one end (23) of the switch spring (22) engaging in a recess (24) in the switch sleeve (25).

**7.** Hand machine tool according to Claim 6, characterized in that the hand machine tool is provided with a freewheel lock (250) which is formed by an additional wrap spring coupling (250, 251, 252) which is wound in the opposite direction to the wrap spring (222) of the wrap spring coupling (218, 221, 222).

8.   Hand machine tool according to one of the preceding claims, characterized in that the hand machine tool has an overload detector which switches off the drive motor (3) when the clutch (18, 21, 22) slips.

**Revendications**

1.   Machine électroportative à main, notamment perforateur comportant un axe de commutation (19) prévu dans la ligne de transmission entre un moteur (3) et un porte-outil (7), cet axe pouvant être couplé à un boîtier (2) de la machine électroportative par l'intermédiaire d'un ressort frein (30) d'un embrayage à ressort à boucle (21, 30, 32), une extrémité (33) du ressort frein (30) étant reliée solidairement en rotation à une douille de commutation (25) qui entraîne en rotation l'axe de commutation (19) lorsque la machine électroportative fonctionne normalement, et qui peut être freinée pour coupler l'embrayage à ressort enveloppe (31, 30, 32) à l'aide d'un frein électromagnétique (36) par rapport à l'axe de commutation (19), caractérisée en ce que l'action de freinage du frein électromagnétique (36) est activée par une installation de détection pour le cas du blocage de l'outil.

2.   Machine électroportative à main selon la revendication 1, caractérisée en ce que le frein électromagnétique (36) comporte une bobine (37) traversée par un courant électrique en cas de blocage.

3.   Machine électroportative à main selon la revendication 1 ou 2, caractérisée en ce que le ressort frein (30) entoure à l'état de freinage, la douille de commutation (25) au moins partiellement autour d'un moyeu (32) solidaire du boîtier.

4.   Machine électroportative à main selon l'une des revendications précédentes, caractérisée en ce que la surface du frein électromagnétique (36) qui coopère en alternance avec la douille de commutation (25) est munie d'une garniture de frein (38).

5.   Machine électroportative à main selon l'une des revendications précédentes, caractérisée en qu'à l'aide du frein électromagnétique (36) et de la douille de commutation (25), on actionne simultanément un embrayage de commutation (18, 21, 22) qui sépare l'axe de commutation (19) du moteur (3).

6.   Machine électroportative à main selon la revendication 5, caractérisée en ce que l'embrayage de commutation (18, 21, 22) est un embrayage à ressort à boucle comportant un ressort de commutation (22) dont une extrémité (23) pénètre dans une découpe (24) de la douille de commutation (25).

7.   Machine électroportative à main selon la revendication 6, caractérisée en ce que la machine électroportative à main est munie d'un verrou de roue libre (250) formée par un embrayage à ressort enveloppe (250, 251, 252) supplémentaire qui a un sens d'enroulement opposé à celui du ressort enveloppe (222) de l'embrayage à ressort enveloppe (218, 221, 222).

8.   Machine électroportative à main selon l'une des revendications précédentes, caractérisée en ce qu'elle comporte un détecteur de surcharge qui coupe le moteur (3) en cas de patinage de l'embrayage de commutation (18, 21, 22).

FIG. 1

FIG. 2

FIG. 3

EP 0 486 843 B1

# FIG. 4

## FIG.5

EP 0 486 843 B1